# EUROPÄISCHE PATENTSCHRIFT

(11) **EP 1 019 192 B1**
(45) Veröffentlichungstag und Bekanntmachung des Hinweises auf die Patenterteilung: **31.07.2002**
(21) Anmeldenummer: 98959703.4
(22) Anmeldetag: 02.10.1998
(51) Int. Cl.: B01J 41/00

(54) **VERWENDUNGEN ANIONENAUSTAUSCHENDER MINERALIEN, DIE NO3- REVERSIBEL BINDEN**
USE OF ANION-EXCHANGING MINERALS, THAT REVERSIBLY BIND NO3-
UTILISATION DE MINERAUX ECHANGEURS D'ANIONS, LIANT NO3- DE MANIERE REVERSIBLE

(30) Priorität: 02.10.1997 DE 19743606
(43) Veröffentlichungstag der Anmeldung: 19.07.2000
(73) Patentinhaber: Hydro Agri GmbH & Co. KG, 48249 Dülmen (DE)
(72) Erfinder: KUHLMANN, Hermann, D-48249 Dülmen (DE); SEWARD, Paul, D-48161 Münster (DE); BUHL, Josef-Christian, D-29339 Wathlingen (DE); BEAVERS, Kirstin, D-30177 Hannover (DE); SCHENK, Manfred, D-30625 Hannover (DE); BULL, Claus, D-30455 Hannover (DE)
(74) Vertreter: Läufer, Martina
(86) Internationale Anmeldenummer: DE9802927
(87) Internationale Veröffentlichungsnummer: WO9917879

(56) Entgegenhaltungen:
- EP-A- 0 207 707
- DE-A- 4 125 627
- GB-A- 1 336 864
- GB-A- 1 336 866
- US-A- 4 396 412

## Beschreibung

Die Erfindung betrifft die Verwendung gesichteter Doppelhydroxide (LDHs), die Anionen, wie unter anderem NO₃⁻, reversibel binden, (d.h. austauschen), als Dünge- und Bodenverbesserungsmittel oder zur Entfernung von Nitrat bei der Reinigung und Aufbereitung von Wässern.

Die Erfindung bezieht sich im weiteren Sinne auf die gezielte Zuführung und Entfernung von Nitraten.

Die optimale Ernährung von Kulturpflanzen - im Freiland sowie im Gewächshaus - erfordert unter anderem eine ausreichende und zeitlich auf den Wuchs der Pflanzen abgestimmte Versorgung mit Stickstoff. Als globalen Richtwert kann man annehmen, daß während einer Vegetationsphase ca. 200 kg N/ha benötigt werden, wobei die Pflanzen je nach Art und Sorte und je nach Entwicklungsstadium unterschiedliche Ansprüche stellen.

Die Versorgung der Pflanzen mit Stickstoff in der richtigen Menge zum richtigen Zeitpunkt ist aus verschiedenen Gründen nicht einfach. Stickstoff kann in Form von Ammoniumionen (NH₄⁺) oder Nitrationen (NO₃⁻) zur Verfügung gestellt werden, wobei im Boden zwischen den verschiedenen Formen gebundenen Stickstoffs ein kompliziertes Gleichgewicht besteht. Im Boden liegen - in unterschiedlicher Menge - Mikroorganismen vor, die Ammonium in Nitrat umwandeln können.

Wegen der fehlenden Anionenaustauschkapazität unserer Kulturböden wird das Nitrat jedoch leicht ausgewaschen und gelangt dann in das Oberflächen- und Grundwasser. Häufig werden deshalb Nitrifikationshemmer eingesetzt, mit denen die im Boden vorhandenen Mikroorganismen behindert werden sollen, um eine zu starke Umwandlung von Ammonium in Nitrat zeitweilig zu vermeiden.

Die Auswaschung von Kationen ist dagegen von untergeordneter Bedeutung, weil diese an den Austauscherplätzen im Boden normalerweise vorhandener Tonmineralien gebunden werden können. Ammoniumionen und für die Pflanzenkultur ebenfalls wichtige Kationen wie z.B. Kalium, Magnesium oder Kalzium können daher in unseren Kulturböden im allgemeinen genügend gehalten werden. Eine Ausnahme bilden die extremen Sandböden mit geringem Tonmineralienanteil, wo auch die Kationenauswaschung ein Problem darstellt.

Im Stande der Technik sind daher verschiedene Ansätze bekannt, mit denen einem Kulturboden über längere Zeit kontinuierlich von den Pflanzen verwertbarer Stickstoff zugeführt werden soll. Bekannte Dünge- und Bodenverbesserungsmittel mit Depot-Wirkung arbeiten beispielsweise mit Düngemittelmischungen, aus denen Stickstoff zu unterschiedlichen Zeiten in einer Vegetationsperiode freigesetzt werden soll.

Aus der DE 33 21 053 C2 ist beispielsweise ein Düngemittel mit Langzeitwirkung und programmierter Nährstoffabgabe zur Deckung des Nährstoffbedarfs einer Pflanze während einer Kulturperiode in Form einer Mischung aus einer Startergabe, einer Dauergabe und einer Termingabe bekannt, wobei die Dauergabe und die Termingabe aus Düngemittelteilchen bestimmter Korngröße bestehen, die mit einer bestimmten, die sofortige Abgabe von Stickstoff verhindernden Beschichtung versehen sind.

Aus der US-PS 4,396,412 ist bereits ein Anionenaustauscher bekannt, der als Düngemittel Verwendung findet. Das dort zitierte Ionenaustauscherharz besteht dabei aus vernetzten Kunststoffen, wie Polyacrylamiden, Polymetacrylaten usw.. Es handelt sich dabei nicht um ein Mineral.

Ferner sind auch Bodensubstrate bekannt, die direkt als Kulturmedien - beispielsweise in Gewächshauskulturen - oder als Bodenverbesserungsmittel einsetzbar sind und die größtenteils aus neutralen porösen Materialien wie Zeolithen und dergleichen bestehen, deren physikalische Adsorptions- und Filterwirkung ausgenutzt werden soll.

Die bekannten Dünge- und Bodenverbesserungsmittel haben ferner den Nachteil, daß sie die Nährstoffe nicht dem Pflanzenbedarf entsprechend freisetzen, sondern die Freisetzung vielmehr eine Folge der Einwirkung von Bodenfaktoren (Temperatur, Wasser, Mikroorganismen) ist. Daraus folgt, daß Nährstoffe, die aufgrund von Bodenfaktoren bei gleichzeitig geringem Nährstoffbedarf der Pflanzen freigesetzt werden, potentiell der Auswaschung ausgesetzt sind und zur Umweltbelastung führen.

Der Erfindung liegt daher das Problem zugrunde, daß ein umweltverträglicher Anionenaustauscher gefunden werden soll, der insbesondere eine gute Austauschkapazität für Nitrationen besitzt.

Bezüglich eines Dünge- und Bodenverbesserungsmittels besteht dabei die Aufgabe darin, ein solches Mittel zu finden, das eine puffernde Wirkung auf den Nitratgehalt in der Bodenlösung ausübt, welches also zunächst den Stickstoffbedarf der Pflanzen durch kontinuierliche, bedarfsgerechte Nitratabgabe decken kann, andererseits aber auch überschüssig im Boden und im durchströmenden Bodenwasser vorhandenes Nitrat wieder binden kann. Das Mittel kann somit der gleichmäßigen Versorgung von Kulturböden mit Stickstoff in Form von Nitrat dienen.

Bezüglich eines Mittels zur Reinigung und Aufbereitung von Wässern besteht die Aufgabe darin, Nitrat auf kostengünstige Weise effizient aus Trink- oder Abwässern zu entfernen.

Aus der EP 0 277 107 ist bereits ein anorganisches Material bekannt, das bei hohen Temperaturen von über 160°C zu einem anionenaustauschenden Material kalziniert werden kann. Dabei findet primär kein reversibler Austausch, sondern eine Adsorption unter Umkristallisieren des Minerals statt.

Die Aufgaben werden durch die Verwendung geschichteter Doppelhydroxide (LDHs), die u.a. NO₃⁻ reversibel austauschen, als Düngeund Bodenverbesserungsmittel sowie zur Reinigung und Aufbereitung von Wässern gelöst, wie in Ansprüchen 1 und 10 angegeben.

Es handelt sich dabei vorzugsweise um natürliche oder synthetische LDHs und hierbei wiederum vorzugsweise um im wesentlichen carbonatfreie geschichtete Doppelhydroxide (LDHs), die in den Zwischenschichten austauschbar gebundene Anionen enthalten. Die erfindungsgemäßen LDHs können durch folgende Formeln wiedergegeben werden :

[M^{II} ₍₁₋ₓ₎M^{III} ₓ(OH)₂]^{x+}(Aⁿ⁻ _{x/n}) ^{.} ₘ H₂O ,

wobei
- M^{II}: ein zweiwertiges Metallion wie z.B. Ca, Mg, Fe, Ni, Zn, Co, Cu, Mn oder 2 Li, vorzugsweise Ca, Mg oder Fe bedeutet,
- M^{III}: ein dreiwertiges Metallion, vorzugsweise Al, Fe, Cr oder Mn bedeutet,
- Aⁿ⁻: ein in der Zwischenschicht gebundenes n-wertiges Anion wie z.B. Nitrat, Sulfat, Chlorid oder Hydroxid bedeutet.

LDHs bestehen aus zweiwertigen Metallionen (M^{II}), die von OH⁻ umgeben sind. Durch den Ersatz der zweiwertigen durch dreiwertige Metallionen (M^{III}) im Gitter entsteht ein positiver Ladungsüberschuß, der durch Anionen (An⁻) in der Zwischenschicht ausgeglichen werden kann. Hydrotalcite und Pyroaurite gleichen in ihrer Struktur den LDHs.

Die Anionen der gemäß der Erfindung zu verwendenden LDHs können für den jeweiligen Zweck passend ausgetauscht werden. Für die Verwendung als Düngemittel wird möglichst viel Nitrat in das LDH und dadurch in den Boden eingebracht. Dies kann gleich bei der Synthese geschehen, oder es können anschließend über eine Sättigung mit fließender Nitratlösung (beispielsweise auf einer Säule) andere Ionen durch Nitrat verdrängt werden.

Für die Verwendung als Mittel zur Reinigung und Denitrifizierung von Wasser sollte das LDH zunächst möglichst wenige, nämlich praktisch keine, Nitrationen enthalten. Vorszugsweise sind die Anionen dann Chloridionen. Es kommt aber beispielweise auch SO₄²⁻ in Frage.

Für die Verwendungen des LDHs nach der Erfindung bzw. für das Dünge- und Bodenverbesserungsmittel lassen sich auch entsprechende natürliche LDH-ähnliche Mineralien einsetzen.

Zum Zeitpunkt des Ausbringens als Düngemittel ist das auf die eine oder andere Weise erhaltene LDH mit einem möglichst hohen Nitratgehalt versehen. Vorzugsweise sollte das Dünge- und Bodenverbesserungsmittel bei Ausbringung fast vollständig mit Nitrat beladen sein, d.h. wenigstens 80% der austauschbar gebundenen Anionen im LDH können Nitrationen sein. Die vollständige Beladung mit Nitrationen, bei der wenigstens 80% der Anionen im LDH Nitrationen sind, entspricht bei den in Frage kommenden LDHs einem Anteil von bis zu 30 Gew.-% Nitrationen bezogen auf das Gewicht des LDHs, nämlich etwa 10 - 30 Gew.-%, meist zwischen 20 und 25 Gew.-%. Es kann auch erwünscht sein, daß dem Boden noch andere Anionen als Nitrationen gezielt zugeführt werden ; in diesem Falle ist die Nitrationenkonzentration gegebenenfalls geringer als 80% der Anionen - je nachdem, wie der Anteil der übrigen Anionen gewählt wird.

In der folgenden Kulturperiode wird das Nitrat langsam durch Ionenaustausch freigesetzt. Da die Nitrationen, wie überhaupt die Anionen, aufgrund des positiven Ladungsüberschusses im mineralischen Gitter eine gewisse nicht zu geringe Affinität zu dem erfindungsgemäß einzusetzenden LDH haben, findet kein einfaches Auswaschen des Nitrates statt. Der Nitratgehalt steht vielmehr in einem Gleichgewicht zwischen "mineral-gebunden" und "in Lösung" (im natürlichen Bodenwasser), so daß die Nitratkonzentration wesentlich kleiner ist als in üblich gedüngten Böden aber noch ausreichend, um den Bedarf der Planze abzudecken.

Das LDH ist sehr stabil und bleibt während der Kulturphase weitestgehend erhalten. Somit kann das LDH nach einer ersten Nitratabgabephase wieder mit Nitrat, das aus Düngung oder Mineralisierung stammt, beladen werden. Das Nitrat kann erneut langsam freigesetzt werden.

Das LDH wirkt daher auch als Bodenverbesserungsmittel, indem es den Nitratgehalt des Bodens abpuffert, d.h. in Zeiten größeren NO₃⁻-Angebots Nitrat aufnimmt und bei Nitratmangel wieder freisetzt. Auf diese Weise wird die Nitratkonzentration in der Bodenlösung auf einem niedrigen Niveau gehalten, wenn von den Pflanzen kein oder wenig Nitrat benötigt wird (dies ist insbesondere in Brachezeiten wie im Herbst und im Winter von Bedeutung). Das LDH stellt das gebundene Nitrat für die dann folgende Kultur wieder zur Verfügung. Bei dem erfindungsgemäß zu verwendenden LDH handelt es sich also um einen Nitratiönenaustauscher und unter Bodenbedingungen um einen Nitratpuffer.

Zum Zeitpunkt des Ausbringens als Bodenverbessungsmittel und Nitratpuffer kann das auf die eine oder andere Weise erhaltene LDH auch mit einem möglichst geringen Nitratgehalt versehen sein.

Das erfindungsgemäß zu verwendende bzw. in dem Dünge- und Bodenverbesserungsmittel enthaltene LDH vermindert demnach die Nitratauswaschung aus Kulturböden in das Grundwasser und trägt somit auch wesentlich zum Umweltschutz bei.

Die Erfindung stellt eine Nitratkonzentration in der Bodenlösung sicher, die zur Deckung der Aufnahmerate der Wurzeln bei optimaler Entwicklung der Pflanzen ausreicht und wesentlich niedriger ist als bei Verwendung üblicher Nitratdüngemittel. Das austauschbar gebundene Nitrat wird wie oben beschrieben langsam und gezielt freigesetzt. Die Freisetzung wird durch den Nitratbedarf der Pflanze gesteuert. Es handelt sich daher bei der Erfindung um ein Düngemittel mit Depotwirkung (einen triggered release fertilizer").

Das LDH ist im Boden langfristig stabil, und im Gegensatz zu im Boden unter Umständen vorhandenen Anionenaustauschern ist die Austauschkapazität vom pH-Wert unabhängig, so daß eine Wirkungssicherheit unter Kulturbedingungen besteht. Die für Böden bekannte extrem geringe Anionenaustauschkapazität basiert im wesentlichen auf amorphen und kristallinen Eisenverbindungen, deren Austauschkapazität mit sinkendem pH-Wert zunimmt. Die Eisenverbindungen sind daher nur in Böden mit deutlich saurem pH-Wert von Bedeutung, ansonsten aber wirkungslos.

Die Erfindung erlaubt es, die von einer Kultur benötigten Stickstoff-Mengen in einer Gabe zu Kulturbeginn zu applizieren, ohne daß Pflanzenschäden durch zu hohe Salzkonzentrationen im Boden auftreten. Dabei wird das Nitrat in der dicht durchwurzelten oberen Bodenschicht gehalten, so daß es der Pflanze, insbesondere auch Kulturen mit geringer effektiver Durchwurzelungstiefe voll zur Verfügung steht. Die Erfindung kann daher besonders vorteilhaft auch bei der Produktion von Rollrasen eingesetzt werden, um die dünne Bodenschicht mit Anionenaustauschkapazität auszustatten. Am endgültigen Standort wird dadurch der gedüngte Stickstoff vor der Auswaschung geschützt, was bei dem sehr flachwurzelnden Rasen sonst leicht eintreten kann. Die Erfindung ist insbesondere auch geeignet, um den Boden intensiv genutzter Rasenflächen, wie auf Golfplätzen, Sportplätzen usw. durch Ausstattung mit Anionenaustauschkapazität zu verbessern und dadurch Nitrat vor der Auswaschung zu schützen.

Die Erfindung kann in Substraten und Blumenerden als langsamfließender N-Dünger eingesetzt werden. So kann die Erfindung im Erwerbsgartenbau bei Freilandkulturen, wie z. B. Calluna, Erica, Container-Kulturen o.ä., und im Hobbybereich bei Beet- und Balkonpflanzen verwendet werden. Die Erfindung ist als langsamfließender N-Dünger auch zur Rasendüngung geeignet. Dabei wird der N-Bedarf kontinuierlich über einen längeren Zeitraum gedeckt, ohne daß es bei der Applikation zu Pflanzenschäden durch überdüngung kommen kann.

Die Erfindung ist ebenfalls gut geeignet, um in hydroponischen Systemen den N-Bedarf der Kulturen langfristig zu decken und zur Stabilisierung der Salzkonzentration beizutragen.

Das gemäß der Erfindung als Dünge- und Bodenverbesserungsmittel zu verwendende LDH kann mit anderen Nährstoffen in Mehrnährstoffdüngern eingesetzt werden, beispielsweise in Kombination mit einem üblichen Mischdünger, oder mit verschiedenen anderen Düngekomponenten und/oder sonstigen Zusatzstoffen.

Das Dünge- und Bodenverbesserungsmittel kann plaziert als Streifen-, Reihen- oder Punktdüngung ausgebracht werden, um die N-Effizienz zu erhöhen. Gasförmige N-Verluste (N₂, N₂O, NO) und Nitratauswaschungen werden minimiert.

Das Düngemittel kann auch in einer Zubereitung mit Saatgut, Sämlingen oder anderem Vermehrungsmaterial vorliegen. Es ist insbesondere geeignet, um Saatgut mit einer N-haltigen Hülle zu ummanteln, wodurch die Anfangsernährung der Sämlinge sichergestellt wird.

Das Dünge- und Bodenverbesserungsmittel kann - alleine oder in Kombination mit anderen Düngern - in flüssiger Form, beispielsweise als Emulsion, Gel oder Paste, oder in fester Form, beispielsweise in Form von Pulver, Granulat oder Prills zubereitet und gegeben werden.

Auch ohne Nitratbeladung ist das erfindungsgemäß verwendete LDH als Bodenverbesserungsmittel zur Melioration von Flächen geeignet, die ein hohes Nitratauswaschungspotential haben. Dies gilt besonders für Flächen mit langjährigem Anbau von intensiven Kulturen, wie z.B. Gemüse, Sonderkulturen oder Böden mit geringer Wasserspeicherfähigkeit. Allgemein kann die Erfindung in allen Böden eingesetzt werden, wo mit Nitratauswaschung zu rechnen ist, bzw. Nitratauswaschung verhindert werden soll.

Die hier für Nitrat aufgezeigten speziellen Eigenschaften gelten auch teilweise für Sulfat und ähnliche Anionen.

Die erfindungsgemäße Verwendung zur Entfernung von Nitrat bei der Reinigung und Aufbereitung von Wässern stellt eine Umkehrung der geschilderten Vorgänge dar. Bei Wahl geeigneter Gegenionen, wie Hydroxid oder Chlorid, kann aus Wässern, welche beispielsweise durch eine Mineralschicht entsprechend der Erfindung strömen, Nitrat durch Austausch mit diesen Gegenionen abgefangen werden. Dies kann z.B. auf einer herkömmlichen Säule, bzw. in größerem Maßstab in einem Turm geschehen. Das Gleichgewicht muß dabei so gehalten werden, daß die erneute Abgabe von Nitrat vermieden wird. Das LDH ist daher in bestimmten Abständen zu regenerieren, wie dies auch bei anderen technischen Ionenaustauschvorgängen geschieht.

Die Erfindung eignet sich zur Entfernung von Nitrat bei der Reinigung von Abwässern ebenso wie für die Reinigung und Aufbereitung von Trinkwässern.

Das LDH übt gleichzeitig eine Filterwirkung aus, so daß grobe Partikel und Schwebstoffe zurückgehalten werden können.

Das für die Wasserbehandlung zu verwendende LDH kann relativ kostengünstig hergestellt werden und ermöglicht ein besonders umweltfreundliches Behandlungsverfahren, da keine Kunststoffionenaustauscher verwendet werden müssen, die Probleme bei der späteren Deponierung bereiten würden.

Bei der vorliegenden Erfindung sind vielmehr beide Verwendungen günstig miteinander zu kombinieren, da der für die Abwasserreinigung verwendete LDH-Anionenaustauscher im beladenen Zustand (mit Nitrat beladen) selbst ein Bodenverbesserungsmittel nach der Erfindung darstellt und demzufolge einfach deponiert, dem in städtischen Kompostierungsanlagen gewonnenen Kompost zugesetzt oder sogar für die Düngung anderen Orts genutzt werden kann.

Im folgenden werden bestimmte Aspekte der Erfindung nochmals anhand von Diagrammen erläutert, und zwar zeigt
- Abb.1: die Struktur eines LDH's am Beispiel von Mg₆Fe₂(OH)₁₆(NO₃)_{2;}
- Abb.2: die Nitratfreisetzung aus einem Mg-Al-LDH in Abhängigkeit verschiedener Extraktionslösungen;
- Abb.3: die Nitratfreisetzung aus einem Mg-Al-LDH in Abhängigkeit von der KCl-Ausgangskonzentration;
- Abb.4: die pH-Stabilität eines Mg-Al-LDH's;
- Abb.5: die Nitratfreisetzung und -aufnahme bei einem Mg-Fe(III)-NO₃⁻-LDH in Abhängigkeit verschiedener Austauschlösungen.

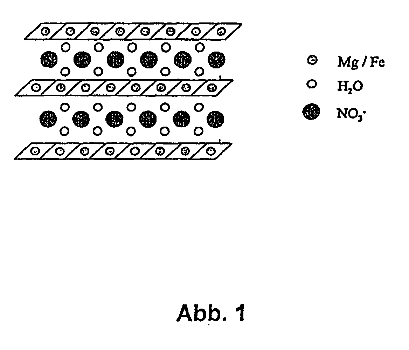

Abb. 1 zeigt die Struktur eines LDH's am Beispiel von Mg₆Fe₂(OH)₁₆(NO₃)₂. Wie oben beschrieben gibt es auch mit anderen, hauptsächlich zwei- und dreiwertigen Kationen und mit anderen Gegenionen Schichtminerale, natürliche und synthetische. Die Schichtstruktur ermöglicht den relativ problemlosen Austausch anderer Anionen wie Nitrat, Sulfat, Chlorid oder Hydroxid. Dennoch ist eine Bindung vorhanden, die gerade so stark ist, daß diese Ionen das Gitter auch nicht zu leicht verlassen können, wodurch an die Stelle eines einfachen "Ausspülens" eine gezielte Abgabe der Anionen, insbesondere der Nitrationen, tritt, die u.a. von einer durch Verbrauch gesteuerten Gleichgewichtsverschiebung getrieben wird.

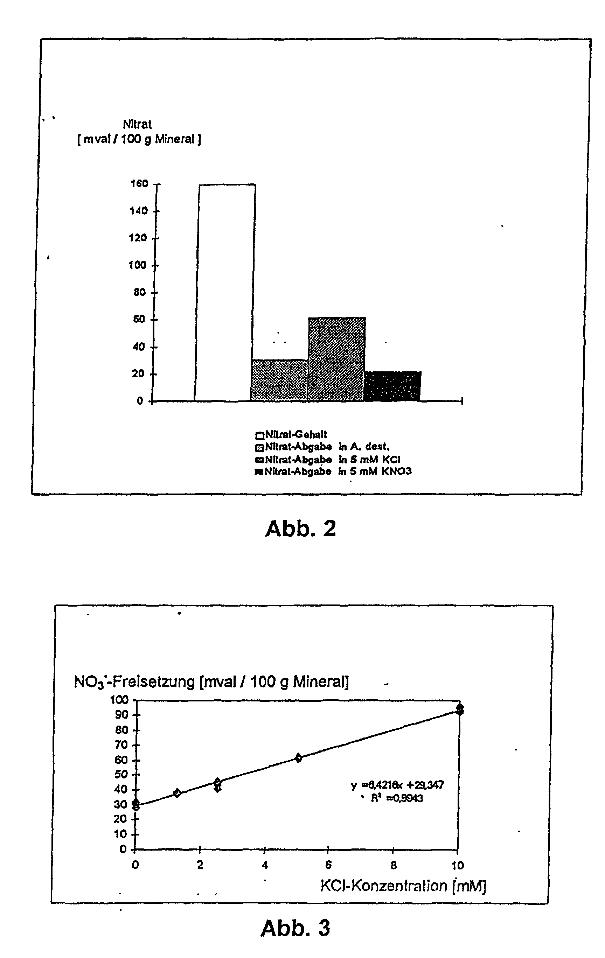

Abb. 2 zeigt die Nitratfreisetzung aus einem Mg-Al-LDH in Abhängigkeit verschiedener Extraktionslösungen. Bei einem NitratGehalt von 160 mval/100 g Mineral, entsprechend einem NitratGehalt von knapp 10 Gew.-% bezogen auf das Mineral, werden nur 30 mval in die Lösung abgegeben, wenn deionisiertes Wasser als Extraktionsmittel verwendet wird. In einer Extraktionslösung mit 5 mM Kaliumnitrat werden jedoch nur 21 mval Nitrat abgegeben. Dies zeigt eine deutliche Pufferwirkung des Minerals bezüglich des Nitratgehaltes des Umgebungsmediums. Bei der Verwendung von 5 mM KCl-Lösung beträgt die Nitrat-Abgabe 61 mval. Im Vergleich zu deionisiertem Wasser ist die Nitratfreisetzung deutlich erhöht, da Chlorid-Ionen Nitrat austauschen können.

Abb. 3 zeigt die Nitratfreisetzung aus einem Mg-Al-LDH in Abhängigkeit von der KCl-Ausgangskonzentration. Hieraus ist zu erkennen, daß die Menge des abgegebenen Nitrats in Beziehung zu der angebotenen Menge des Chlorids steht. Für andere Anionen lassen sich entsprechende Beziehungen aufstellen.

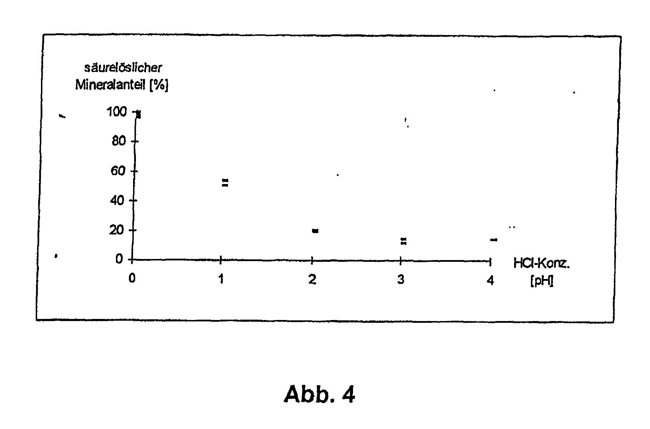

Abb. 4 zeigt die pH-Stabilität eines Mg-Al-LDH's. Angegeben ist jeweils, wieviel Gew.-% des Minerals bei einem bestimmten pH-Wert in Lösung gehen. Da die Minerale bis pH 3 weitgehend stabil sind, bleibt das Mineral im Boden über eine Kulturphase hinweg und länger erhalten und kann in einer weiteren Phase mit Nitrat beladen werden, das aus Düngung oder Mineralisierung stammen kann.

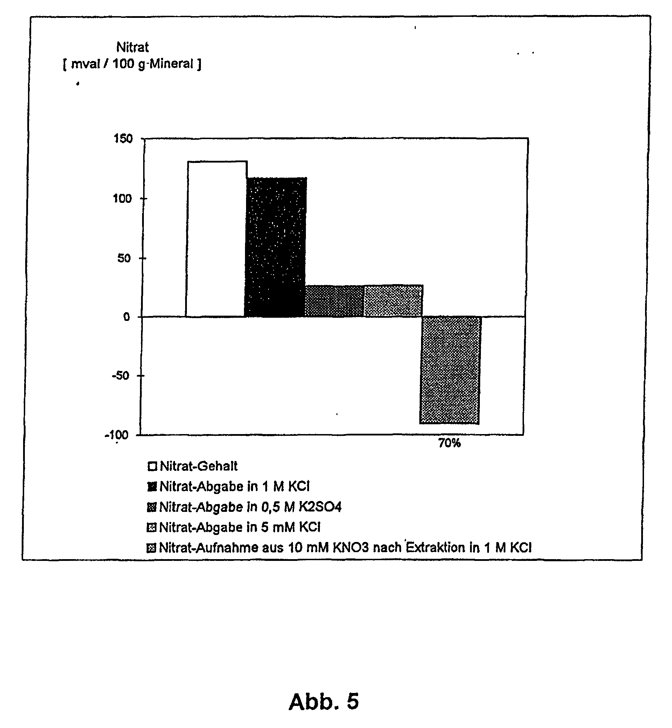

Abb. 5 zeigt das Austauschverhalten eines MG-Fe(III)-NO₃⁻-LDHs in verschiedenen Lösungen. Wie zu erkennen, erfolgt der Austausch des Nitrats mit Sulfat sehr viel langsamer als mit Chlorid, was die Ausbringung des LDHs als Düngemittel bei gleichzeitiger Anwendung sulfathaltiger Düngemittel ermöglicht, die andernfalls eine zu schnelle Nitratfreisetzung provozieren könnten. Außerdem zeigt die Abbildung, daß sich der LDH gut mit NO₃⁻ wiederbeladen läßt.

### Beispiele

### Herstellung eines Me(II)-Me(III)-NO₃-LDH

### 1. Gemeinsame Fällung:

Es werden 300 ml einer Lösung hergestllt, die 0,4 mol/l Eisen (III)Nitrat und 1,6 mol/l Magnesiumnitrat enthält. Diese Lösung wird unter Rühren langsam in 120 ml aqua dest. gegeben, das mit Hilfe von 4 mol/l Kaliumhydroxid-Lösung, die 0,6 mol/l Kaliumnitrat enthält, auf einen pH-Wert von 11 ± 0,1 eingestellt wird. Mit einem pH-Staten wird im Verlauf der Fällung der pH-Wert konstant gehalten.

### Bedingungen:

Die Fällungsreaktion sollte über einen längeren Zeitraum stattfinden, d.h. es sollten weniger als 12 ml/h beispielsweise 4 ml/h der unter 1 genannten Lösung langsam mit einer Schlauchpumpe in die Vorlage gegeben werden. Die Lösungen sollten unter CO₂-Ausschluß behandelt werden und weitestgehend carbontfrei sein.

### 2. Behandlung des ausgefällten Produktes:

Nach Abschluß der Fällungreaktion wird das erhaltene mineralische Produkt abgenutscht. Danach wird es einer Temperaturbehandlung bei 200°C unterzogen.

### 3. Optionen:

Das getemperte Produkt kann anschließend mit einer Hydrogenposphat-Lösung behandelt werden. Hierbei werden z.B. 10 g LDH in einer 11 einer 5 mmol/l Kaliumdihydrogenphosphatlösung für 3 Stunden gerührt und anschließend filtriert und getrocknet. Auch eine entsprechende Säurebehandlung ist möglich.

Schließlich wird das erhaltene Produkt in Wasser gewaschen und getrocknet.

### 4. Alternativen:

Anstelle von Magnesiumnitrat kann auch Calciumnitrat verwendet werden. Anstelle von Eisen(III)-Nitrat kann auch Aluminiumnitrat verwendet werden.

Das Produkt ist ein LDH mit einem Nitratgehalt von mindestens 9 Gew.-%.

### 5. Vorteile:

### Die Mg-Fe-NO₃⁻-LDHs zeigen folgende vorteilhafte Eigenschaften:

Selbst in einer hochkonzentrierten Salzlösung (1mol/L KCl) ist das gebundene Nitrat im ersten Extraktionsschritt nicht vollständig austauschbar. In Hinsicht auf ein langsam fließendes Nitratdüngemittel ist der langsame, allmähliche Nitrataustausch vorteilhaft.

Der Austausch mit Sulfationen ist erschwert gegenüber dem Austausch mit Chloridionen. Dies ist von Vorteil, da viele Düngemittel hohe Sulfatgehalte aufweisen und damit auch nach dem Ausbringen solcher Düngemittel ein langsamer Nitrataustausch aus den hier vorgeschlagenen LDHs gewährleistet ist.

Nach vollständigem Nitrataustausch ist der z.B. dann vorliegende Mg-Fe-Cl-LDH zu erneuter Nitratadsorption befähigt: Nach dreimaligem Angebot von 10 mmol/l KNO₃ hat der LDH einen Nitratgehalt, der 70% des Ausgangsgehaltes betragen kann.

Die angegebenen LDHs sind gut pflanzenverträglich und stellen keine Umweltbelastung dar.

Für die Herstellung eines Mittels zur Reinigung von Abwässern werden vorteilhaft die entsprechenden Chloridsalze eingesetzt.

## Patentansprüche

1. Verwendung geschichteter Doppelhydroxide (LDHs), die NO₃⁻ reversibel austauschen, als Dünge- und Bodenverbesserungsmittel für die gleichmäßige Versorgung von Kulturböden mit Stickstoff in Form von Nitrat, wobei die LDHs in den Zwischenschichten austauschbar gebundene Anionen enthalten und durch folgende Formel wiedergegeben werden können:
[M^{II} ₍₁₋ₓ₎M^{III} ₓ(OH)₂]^{x+}(Aⁿ⁻ _{x/n}) ^{.} m H₂O ,
wobei
M^{II} ein zweiwertiges Metallion oder 2 Li ,
M^{III} ein dreiwertiges Metallion,
Aⁿ⁻ ein in der Zwischenschicht gebundenes n-wertiges Anion bedeutet.

2. Verwendung nach Anspruch 1, **dadurch gekennzeichnet, dass** die LDHs natürliche oder synthetische LDHs sind.

3. Verwendung nach Anspruch 1 oder 2, **dadurch gekennzeichnet, dass** im wesentlichen carbonatfreie geschichtete Doppelhydroxide (LDHs) verwendet werden,
wobei
- das zweiwertige Metallion Ca, Mg, Fe, Ni, Zn, Co, Cu, Mn, vorzugsweise
- Ca, Mg oder Fe ist;
- das dreiwertige Metallion Al, Fe, Cr oder Mn ist;
- das Anion Sulfat, Hydroxid, Chlorid oder Nitrat ist.

4. Verwendung nach einem der Ansprüche 1 bis 3, **dadurch gekennzeichnet, dass** bei Ausbringung des synthetischen oder natürlichen LDHs dieses bis zu etwa 30 Gew.-% Nitrationen enthält.

5. Verwendung nach einem der Ansprüche 1 bis 4, **dadurch gekennzeichnet, dass** die Verwendung in Kombination mit Hilfs- und Zuschlagstoffen erfolgt.

6. Verwendung nach einem der Ansprüche 1 bis 5, **dadurch gekennzeichnet, dass** das LDH ein üblicher Mischdünger und ggf. andere Dünge-Zusatzstoffe zugesetzt sind.

7. Verwendung nach einem der Ansprüche 1 bis 6, **dadurch gekennzeichnet, dass** das LDH in einer Zubereitung mit Saatgut, Sämlingen oder Vermehrungsmaterial vorliegt.

8. Verwendung nach Anspruch 7, **dadurch gekennzeichnet, dass** das Vermehrungsmaterial, das Saatgut oder die Sämlinge innerhalb der Zubereitung mit dem LDH und ggf. weiteren Zusatzstoffen beschichtet vorliegt.

9. Verwendung nach einem der Ansprüche 1 bis 8, **dadurch gekennzeichnet, dass** das LDH in einer Zubereitung in flüssiger Form, beispielsweise als Emulsion, Gel oder Paste, oder in fester Form, beispielsweise als Pulver, Granulat oder Prills vorliegt.

10. Verwendung geschichteter Doppelhydroxide (LDHs), die NO₃⁻ reversibel austauschen, zur Entfernung von Nitrat bei der Reinigung und Aufbereitung von Wässem, wobei die LDHs in den Zwischenschichten austauschbar gebundene Anionen enthalten und durch folgende Formel wiedergegeben werden können:
[M^{II} ₍₁₋ₓ₎M^{III} ₓ(OH)₂]^{x+}(Aⁿ⁻ _{x/n}) ^{.} m H₂O ,
wobei
M^{II} ein zweiwertiges Metallion oder 2 Li,
M^{III} ein dreiwertiges Metallion und
Aⁿ⁻ ein in der Zwischenschicht gebundenes Anion bedeutet.

11. Verwendung nach Anspruch 10, **dadurch gekennzeichnet, dass** die LDHs natürliche oder synthetische LDHs sind.

12. Verwendung nach Anspruch 10 oder 11, **dadurch gekennzeichnet, dass** im wesentlichen carbonatfreie geschichtete Doppelhydroxide (LDHs) verwendet werden, wobei
- das zweiwertige Metallion Ca, Mg, Fe, Ni, Zn, Co, Cu, Mn, vorzugsweise Ca, Mg oder Fe ist;
- das dreiwertige Metallion Al, Fe, Cr oder Mn ist,
- das Anion Sulfat, Hydroxid oder vorzugsweise Chlorid ist.

## Claims

1. Use of layered double hydroxides (LDHs) that reversibly exchange No₃⁻, as fertiliser and soil conditioners for the uniform supplying of arable land with nitrogen in the form of nitrate, wherein the LDHs contain anions exchangeably bound in the interlayers and can be represented by the following formula:
[M^{II} ₍₁₋ₓ₎M^{III} ₓ(OH)₂]^{x+}(Aⁿ⁻ _{x/n}) · m H₂O ,
wherein
M^{II} denotes a divalent metal ion or 2 Li,
M^{III} denotes a trivalent metal ion,
Aⁿ⁻ denotes an n-valent anion bound in the interlayer.

2. Use according to claim 1, **characterised in that** the LDHs are natural or synthetic LDHs.

3. Use according to claim 1 or 2, **characterised in that** substantially carbonate-free layered double hydroxides (LDHs) are used, in which
- the divalent metal ion is Ca, Mg, Fe, Ni, Zn, Co, Cu, Mn, preferably Ca, Mg or Fe;
- the trivalent metal ion is Al, Fe, Cr or Mn;
- the anion is sulfate, hydroxide, chloride or nitrate.

4. Use according to one of claims 1 to 3, **characterised in that** in the application of the synthetic or natural LDH, the latter contains up to about 30 wt.% of nitrate ions.

5. Use according to one of claims 1 to 4, **characterised in that** the use is carried out in combination with auxiliary substances and additives.

6. Use according to one of claims 1 to 5, **characterised in that** a conventional mixed fertiliser and optionally other fertiliser additives are added to the LDH.

7. Use according to one of claims 1 to 6, **characterised in that** the LDH is present in a formulation with seed material, seedlings or propagation material.

8. Use according to claim 7, **characterised in that** the propagation material, the seed material or the seedlings are present in coated form within the formulation together with the LDH and optionally further additives.

9. Use according to one of claims 1 to 8, **characterised in that** the LDH is present in a formulation in liquid form, for example as emulsion, gel or paste, or in solid form, for example as powder, granules or prills.

10. use of layered double hydroxides (LDHs) that reversibly exchange NO₃⁻, for the removal of nitrate in the purification and regeneration of waters, wherein the LDHs contain anions exchangeably bound in the interlayers and can be represented by the following formula:
[M^{II} ₍₁₋ₓ₎M^{III} ₓ(OH)₂]^{x+}(Aⁿ⁻ _{x/n}) · m H₂O ,
wherein
M^{II} denotes a divalent metal ion or 2 Li,
M^{III} denotes a trivalent metal ion, and
Aⁿ⁻ denotes an anion bound in the interlayer.

11. Use according to claim 10, **characterised in that** the LDHs are natural or synthetic LDHs.

12. Use according to claim 10 or 11, **characterised in that** substantially carbonate-free layered double hydroxides (LDHs) are used, wherein
- the divalent metal ion is Ca, Mg, Fe, Ni, Zn, Co, Cu, Mn, preferably Ca, Mg or Fe;
- the trivalent metal ion is Al, Fe, Cr or Mn;
- the anion is sulfate, hydroxide, preferably chloride.

## Revendications

1. Utilisation d'hydroxydes doubles lamellaires (LDH) qui échangent NO₃⁻ de façon réversible, en tant que moyen de fertilisation et d'amélioration du sol pour un approvisionnement régulier en azote sous forme de nitrate des sols cultivés, les LDH contenant fixés dans les espaces interlamellaires des anions échangeables, et pouvant être rendus par la formule suivante:
[M^{II} ₍₁₋ₓ₎M^{III} ₓ(OH)₂]^{x+}(Aⁿ⁻ _{x/n}) · m H₂O,
où
M^{II} représente un ion métallique divalent ou 2 Li,
M^{III} représente un ion métallique trivalent,
Aⁿ⁻ représente un anion n-valent fixé dans l'espace interlamellaire.

2. Utilisation selon la revendication 1, **caractérisée par le fait que** les LDH sont des LDH naturels où synthétiques.

3. Utilisation selon la revendication 1 ou 2, **caractérisée par le fait que** sont utilisés des hydroxydes doubles lamellaires (LDH) pratiquement exempts de carbonates,
où
- l'ion métallique divalent est Ca, Mg, Fe, Ni, Zn, Co, Cu, Mn, de préférence Ca, Mg ou Fe;
- l'ion métallique trivalent est Al, Fe, Cr ou Mn;
- l'anion est du sulfate, de l'hydroxyde, du chlorure ou du nitrate.

4. Utilisation selon l'une des revendications 1 à 3, **caractérisée par le fait que** lors de l'apport de LDH synthétique ou naturel, celui-ci contient jusqu'à environ 30% en poids d'ions nitrates.

5. Utilisation selon l'une des revendications 1 à 4, **caractérisée par le fait que** l'utilisation a lieu en combinaison avec des substances auxiliaires et des additifs.

6. Utilisation selon l'une des revendications 1 à 5, **caractérisée par le fait qu'**un engrais mixte usuel et le cas échéant d'autres additifs d'engrais sont ajoutés au LDH.

7. Utilisation selon l'une des revendications 1 à 6, **caractérisée par le fait que** le LDH se trouve dans une préparation avec des semences, des plants de semis ou du matériel de reproduction.

8. Utilisation selon la revendication 7, **caractérisée par le fait que** le matériel de reproduction, la semence ou les plants de semis se trouvent à l'intérieur de la préparation enrobés avec le LDH et le cas échéant d'autres substances additives.

9. Utilisation selon l'une des revendications 1 à 8, **caractérisée par le fait que** le LDH se présente dans une préparation sous forme fluide, par exemple en tant qu'émulsion, gel ou pâte, ou sous forme solide, par exemple en tant que poudre, granulé ou prills.

10. Utilisation d'hydroxydes doubles lamellaires (LDH) qui échangent NO₃⁻ de façon réversible pour éliminer des nitrates lors de l'èpuration et le traitement des eaux, les LDH contenant fixés dans les espaces interlamellaires des anions échangeables, et pouvant être rendus par la formule suivante:
[M^{II} ₍₁₋ₓ₎M^{III} ₓ(OH)₂]^{x+}(Aⁿ⁻ _{x/n}) · m H₂O,
où
M^{II} représente un ion métallique divalent ou 2 Li,
M^{III} représente un ion métallique trivalent,
Aⁿ⁻ représente un anion n-valent fixé dans l'espace interlamellaire.

11. Utilisation selon la revendication 10, **caractérisée par le fait que** les LDH sont des LDH naturels ou synthétiques.

12. Utilisation selon la revendication 10 ou 11, **caractérisée par le fait que** sont utilisés des hydroxydes doubles lamellaires (LDH) pratiquement exempts de carbonates, où
- l'ion métallique divalent est Ca, Mg, Fe, Ni, Zn, Co, Cu, Mn, de préférence Ca, Mg ou Fe;
- l'ion métallique trivalent est Al, Fe, Cr ou Mn;
- l'anion est du sulfate, de l'hydroxyde, ou de préférence du chlorure.
